# EUROPÄISCHE PATENTSCHRIFT

(11) **EP 0 457 945 B1**
(45) Veröffentlichungstag und Bekanntmachung des Hinweises auf die Patenterteilung: **15.09.1993**
(21) Anmeldenummer: 90109816.0
(22) Anmeldetag: 23.05.1990
(51) Int. Cl.: B60K 23/04

(54) **Verfahren zum Regeln des Sperrgrades eines Sperrdifferentials bei Fahrzeugen mit angetriebener Vorderachse**
Method of control of the engagement of a limited slip differential for front wheel driven vehicles
Méthode de contrôle du taux de plissement d'un différentiel commandable pour véhicules avec train avant motrice

(43) Veröffentlichungstag der Anmeldung: 27.11.1991
(73) Patentinhaber: SIEMENS AKTIENGESELLSCHAFT, 80333 München (DE)
(72) Erfinder: Seifert, Gerd, Dipl.-Ing., D-7000 Stuttgart (DE)

(56) Entgegenhaltungen:
- EP-A- 0 311 139
- DE-A- 3 440 492
- FR-A- 2 434 969
- FR-A- 2 638 401
- SOVIET INVENTIONS ILLUSTRATED Sektion Mechanik, Woche 8515, 22. Mai 1985, Zusammenfassung Nr. 91938/15, Derwent Publications Ltd., London, GB; SU - A - 1115928 (BELORUSSIAN POLY) 30.09.1984

## Beschreibung

Die Erfindung bezieht sich auf ein Verfahren gemäß Oberbegriff von Anspruch 1, bekannt aus DE-A-3 440 492.

Bei bekannten Fahrzeugen mit angetriebener Vorderachse bewirken unterschiedliche Umfangskräfte am rechten und linken Vorderrad über die Lenkgeometrie ein Moment am Lenkrad. Dieses Moment bewirkt ein Abweichen des Fahrzeugs von der gewünschten Fahrtrichtung. In "Matschinsky, Die Radführungen der Straßenfahrzeuge, Verlag TÜV Rheinland, S. 176-178" sind die Zusammenhänge zwischen den auf die Räder wirkenden Kräfte und dem sich daraus ergebenden Moment am Lenkrad beschrieben.

Bei Fahrzeugen mit Achsdifferential ohne Sperre treten nur geringe Umfangskraftdifferenzen auf und damit auch nur geringe Momente am Lenkrad. Bei sehr unterschiedlicher Haftung der Antriebsräder kann dann der Fall eintreten, daß das Antriebsrad mit der schlechten Haftung durchdreht und das andere Antriebsrad stillsteht. Das Fahrzeug entwickelt dann trotz guter Haftung eines Antriebsrades keinen oder nur ungenügenden Vortrieb.

Um diesen nachteiligen Effekt des Differentiales und das Durchdrehen zu beseitigen gibt es zwei Möglichkeiten: Entweder eine Differentialsperre zu verwenden, welche die Antriebskräfte in einem festen Verhältnis auf die Antriebsräder verteilt; oder am durchdrehenden Rad die Fahrzeugbremse zu betätigen. Dies hat jedoch in der zuvor geschilderten Situation ein Moment am Lenkrad zur Folge, das auf die unterschiedlichen Reibungsbeiwerte zwischen Fahrbahn und Antriebsrädern zurückzuführen ist.

Wird nun bei bekannten Vorderradantrieben, wenn eine bestimmte Drehzahldifferenz zwischen den beiden Antriebsrädern auftritt, automatisch die Differentialsperre zugeschaltet, oder die Fahrzeugbremse betätigt, kann das dadurch entstehende Moment am Lenkrad für den Fahrer überraschend auftreten und ein Abweichen von der gewünschten Fahrtrichtung bewirken.

Aufgabe der Erfindung ist es, ein Verfahren anzugeben, bei welchem bei automatisch zugeschalteter Differentialsperre oder automatisch betätigter Bremse keine Rückwirkung des Reibungsbeiwertes auf die Lenkung auftritt.

Die erfindungsgemäße Lösung dieser Aufgabe ist in Anspruch 1 gekennzeichnet.

Die Erfindung wird anhand zweier Figuren und der Bezugszeichen -und Begriffsliste näher erläutert.

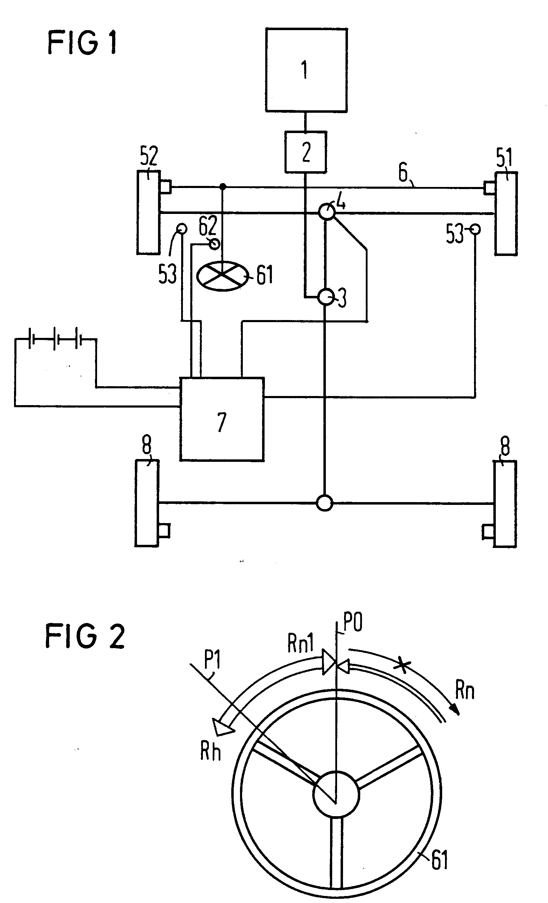

Die Figur 1 zeigt in schematischer Darstellung ein Fahrzeug mit Allradantrieb, bei dem ein Motor 1, über ein Schaltgetriebe 2, ein Verteilergetriebe 3 und ein regelbares Sperrdifferential 4 die Vorderräder 51 und 52 antreibt. Die Vorderräder werden über die Lenkung 6 und das Lenkrad 61 bewegt. Jedem der Vorderräder ist ein Drehzahlsensor 53 zugeordnet, der die Raddrehzahl erfaßt. Am Lenkrad 61 sitzt ein Drehwinkelsensor 62, der Richtung und Betrag der Bewegungen des Lenkrades erfasst. Die von den Drehzahlsensoren 53 und dem Drehwinkelsensor 62 gelieferten Signale werden in einem Steuergerät 7 verarbeitet. Vom Verteilergetriebe 3 aus werden auch die Hinterräder 8 angetrieben. Das erfindungsgemäße Verfahren ist aber ebenso bei Fahrzeugen mit reinem Vorderradantrieb anwendbar.

Das hier beschriebene Verfahren sieht vor, daß das Steuergerät 7 feststellt, wenn eines der Antriebsräder 51, 52 durchdreht; es wertet dazu die von den Drehzahlsensoren 53 gelieferten Signale aus. Als Kriterium ob eines der Antriebsräder 51, 52 durchdreht, dient das Verhältnis der von den beiden Sensoren 53 gelieferten Signale. Eine gewisse Differenz ist erlaubt, um normale Kurvenfahrt zuzulassen. Übersteigt diese Differenz ein bestimmtes Maß wird die Differentialsperre 4 betätigt. Die Erfindung macht sich dabei die Erkenntnis zunutze, daß durch das Auftreten unterschiedlicher Umfangskräfte die Lenkung 6 des Fahrzeugs in Richtung der Fahrzeugseite bewegt wird, auf der die niedrigeren Umfangskräfte auf das Antriebsrad 51, 52 wirken. Wenn aufgrund des Fahrbahnzustandes das Antriebsrad 51 schlechte Haftung hat und durchdreht, das andere Antriebsrad 52 aber gute Haftung besitzt, und daraufhin die Differentialsperre 4 eingeschaltet wird, ist zu erwarten, daß an der Lenkung 6 ein störendes Moment in Richtung des Antriebsrades 51 auftritt.

Das Steuergerät 7 stellt anhand der vom Drehwinkelsensor 62 gelieferten Werte fest, ob sich das Lenkrad 61 in Richtung der Fahrzeugseite bewegt, auf der sich das durchdrehende Antriebsrad 51 befindet. Im folgenden wird diese Richtung die Rn-Richtung (Reibungsbeiwert-niedrig-Richtung) genannt. Die andere Richtung wird im folgenden Rh-Richtung (Reibungsbeiwert-hoch-Richtung) genannt. Wenn sich das Lenkrad 61 in Rn-Richtung bewegt, wird angenommen, daß unterschiedliche Reibungsbeiwerte zwischen Fahrbahn und Antriebsräder 51, 52 auf die Lenkung 6 zurückwirken. Daraufhin wird der Sperrgrad der Differentialsperre 4 soweit verringert bis das Lenkrad wieder in Rh-Richtung bewegt wird, woraus geschlossen wird, daß entweder das Moment am Lenkrad nicht mehr wirkt oder aber der Fahrer aktiv gegenlenkt.

Durch die Figur 2 ist eine Weiterbildung des Verfahrens veranschaulicht. Zu Beginn der automatischen Betätigung der Differentialsperre 4 wird die Ausgangsposition P0 des Lenkrades 61 gespeichert.

Lenkeinschläge, die in Rh-Richtung erfolgen, werden als Gegenlenken des Fahrers auf das Störmoment gewertet. Die Regelung des Sperrgrades wird dadurch nicht beeinflußt. Durch dieses Gegenlenken befindet sich das Lenkrad 61 in einer neuen Position P1. Lenkeinschläge, die von dieser neuen Position in Rn1-Richtung erfolgen, werden als Korrekturen des Fahrers beim Gegenlenken betrachtet, solange das Lenkrad 61 seine Ausgangsposition P0 noch nicht erreicht hat. Erst wenn sich das Lenkrad über die Position P0 hinaus in Rn-Richtung bewegt, wird der Sperrgrad verringert.

Gemäß einer zweiten Ausführungsform der Erfindung wirkt das Steuergerät auf die Bremse des durchdrehenden Rades. Auch in diesem Fall stellt das Steuergerät anhand eines am Lenkrad befestigten Drehwinkelsensors fest, ob sich das Lenkrad in Richtung der Fahrzeugseite bewegt, auf der sich das durchdrehende Antriebsrad befindet (Rn-Richtung). Wenn sich das Lenkrad in Rn-Richtung bewegt, wird der Bremseingriff verringert. Zu Beginn des Bremseneingriffes wird die Ausgangsposition P0 des Lenkrades gespeichert. Analog wie bei dem Einsatz einer geregelten Differentialsperre werden Lenkeinschläge, die auf das Gegenlenken des Fahrers zurückzuführen sind, erkannt und beeinflussen nicht den Einsatz der Fahrzeugbremse.

## Patentansprüche

1. Verfahren zur Antischlupfregelung für ein Fahrzeug mit angetriebener Vorderachse und mit einer Lenkung (6) ausgestatteten Antriebsrädern, bei dem die Drehzahl eines durchdrehenden Rades verringert wird,
**dadurch gekennzeichnet,** daß
- Rückwirkungen des Reibungsbeiwertes zwischen Fahrbahn und den Antriebsrädern (51, 52) auf die Lenkung (6) festgestellt werden und
- beim Auftreten von Rückwirkungen die Verringerung der Drehzahl des durchdrehenden Rades zumindest teilweise wieder aufgehoben wird.

2. Verfahren nach Anspruch 1,
**dadurch gekennzeichnet,** daß
- die Drehzahl des durchdrehenden Rades durch Verändern des Sperrgrades einer Differentialsperre verringert wird.

3. Verfahren nach Anspruch 1,
**dadurch gekennzeichnet,** daß
- die Drehzahl des durchdrehenden Rades durch Abbremsen des durchdrehenden Rades verringert wird.

4. Verfahren nach Anspruch 1,
**dadurch gekennzeichnet,** daß
- ein Steuergerät (7) Signale auswertet, die von Drehzahlsensoren (53) an den Rädern (51, 52) geliefert werden und
- das Durchdrehen eines der Antriebsräder (51, 52) vom Steuergerät (7) erkannt wird.

5. Verfahren nach Anspruch 1,
**dadurch gekennzeichnet,** daß
- ein Sensor die Bewegung der Lenkung (6) erfaßt.

6. Verfahren nach Anspruch 1,
**dadurch gekennzeichnet,** daß
- die Ausgangsposition (P0) der Lenkung (6) bei Beginn des Durchdrehens eines der Antriebsräder (51, 52) im Steuergerät (7) gespeichert wird und
- zum Feststellen des Gegenlenkens seitens des Fahrers die jeweils aktuelle Position (P1) des Lenkrades bezüglich der Ausgangsposition (P0) als Kriterium verwendet wird.

7. Vorrichtung zur Antischlupfregelung für ein Fahrzeug mit angetriebener Vorderachse und mit einer Lenkung (6) ausgestatteten Antriebsrädern (51, 52), wobei ein Steuergerät (7) die von Drehzahlsensoren (53) abgegebenen Signale auswertet, und bei dem die Drehzahl eines durchdrehenden Rades verringert wird,
**dadurch gekennzeichnet,** daß
- ein Sperrdifferential (4) mit regelbarem Sperrgrad vorgesehen ist und
- das Steuergerät (7) den Sperrgrad des Sperrdifferentials (4) regelt.

8. Vorrichtung zur Antischlupfregelung für ein Fahrzeug mit angetriebener Vorderachse und mit einer Lenkung (6) ausgestatteten Antriebsrädern (51, 52), wobei ein Steuergerät (7) die von Drehzahlsensoren (53) abgegebenen Signale auswertet, und bei dem die Drehzahl eines durchdrehenden Rades verringert wird,
**dadurch gekennzeichnet,** daß
- eine Bremse das durchdrehende Rad abbremst, und daß
- das Steuergerät (7) den Eingriff der Bremse regelt.

9. Vorrichtung nach Anspruch 7 oder 8,
**dadurch gekennzeichnet,** daß
- ein Drehwinkelsensor (62) zum Erfassen der Bewegung des Lenkrads (61) vorgesehen ist und
- das Steuergerät (7) den Sperrgrad des Sperrdifferentials (4) oder die Betätigung der Bremse regelt.

## Claims

1. Traction control method for a vehicle with a driven front axle and driving wheels fitted with a steering assembly (6), in which the rotational speed of a spinning wheel is reduced, characterised in that
- reactive effects of the coefficient of friction between the roadway and the driving wheels (51, 52) on the steering assembly (6) are detected and
- in the event of reactive effects occurring, the reduction in the rotational speed of the spinning wheel is at least partially cancelled again.

2. Method according to Claim 1, characterised in that
- the rotational speed of the spinning wheel is reduced by altering the degree of locking of a differential lock.

3. Method according to Claim 1, characterised in that
- the rotational speed of the spinning wheel is reduced by braking the spinning wheel.

4. Method according to Claim 1, characterised in that
- a control unit (7) evaluates signals which are supplied by rotational-speed sensors (53) at the wheels (51, 52) and
- the spinning of one of the driving wheels (51, 52) is detected by the control unit (7).

5. Method according to Claim 1, characterised in that
- a sensor records the movement of the steering assembly (6).

6. Method according to Claim 1, characterised in that
- the starting position (P0) of the steering assembly (6) when one of the driving wheels (51, 52) begins to spin is stored in the control unit (7) and
- the respective current position (P1) of the steering wheel relative to the starting position (P0) is used as the criterion for detecting the counter-steering of the driver.

7. Traction control device for a vehicle with a driven front axle and driving wheels (51, 52) fitted with a steering assembly (6), a control unit (7) evaluating the signals emitted by rotational-speed sensors (53), and in which the rotational speed of a spinning wheel is reduced, characterised in that
- a limited slip-differential (7) with a variable degree of locking is provided and
- the control unit (7) varies the degree of locking of the limited-slip differential (4).

8. Traction control device for a vehicle with a driven front axle and driving wheels (51, 52) fitted with a steering assembly (6), a control unit (7) evaluating the signals emitted by rotational-speed sensors (53), and in which the rotational speed of a spinning wheel is reduced, characterised in that
- a brake brakes the spinning wheel and in that
- the control unit (7) varies the engagement of the brake.

9. Device according to Claim 7 or 8, characterised in that
- a rotational-angle sensor (62) is provided for recording the movement of the steering wheel (61) and
- the control unit (7) varies the degree of locking of the limited-slip differential (4) or the actuation of the brake.

## Revendications

1. Procédé de réglage d'antipatinage pour un véhicule à traction avant, comportant des roues motrices équipées d'une direction (6), et selon lequel on réduit la vitesse de rotation d'une roue qui patine,
caractérisé par le fait que
- des réactions du coefficient de frottement entre la chaussée et les roues motrices (51,52) sur la direction (6) sont déterminées, et
- lors de l'apparition de réactions, la réduction de la vitesse de rotation de la roue qui patine est à nouveau au moins partiellement supprimée.

2. Procédé suivant la revendication 1, caractérisé par le fait que
- la vitesse de rotation de la roue qui patine est réduite par modification du degré de blocage d'un dispositif de blocage du différentiel.

3. Procédé suivant la revendication 1, caractérisé par le fait
- la vitesse de rotation de la roue qui patine est réduite par freinage de cette roue.

4. Procédé suivant la revendication 1, caractérisé par le fait que
- un appareil de commande (7) évalue des signaux qui sont délivrés par des capteurs (53) de la vitesse de rotation, montés au niveau des roues (51,52), et
- le patinage de l'une des roues motrices (51,52) est identifié par l'appareil de commande (7).

5. Procédé suivant la revendication 1, caractérisé par le fait que
- le capteur détecte le déplacement de la direction (6).

6. Procédé suivant la revendication 1, caractérisé par le fait que
- la position initiale (P0) de la direction (6) au début du patinage de l'une des roues motrices (51,52) est mémorisée dans l'appareil de commande (7), et
- pour la détermination du contre-braquage de la part du conducteur, la position respectivement actuelle (P1) du volant par rapport à la position initiale (P0) est utilisée en tant que critère.

7. Dispositif de réglage d'antipatinage pour un véhicule à traction avant comportant des roues motrices (51,52) équipées d'une direction (6), et dans lequel un appareil de commande (7) évalue les signaux délivrés par des capteurs (53) de la vitesse de rotation et dans lequel la vitesse de rotation d'une roue qui patine est réduite, caractérisé par le fait que
- il est prévu un dispositif différentiel de blocage (4) comportant un degré de blocage réglable, et
- l'appareil de commande (7) règle le degré de blocage du dispositif différentiel de blocage (4).

8. Dispositif de réglage d'antipatinage pour un véhicule à traction avant comportant des roues motrices (51,52) équipées d'une direction (6), et dans lequel un appareil de commande (7) évalue les signaux délivrés par les capteurs (53) de la vitesse de rotation et dans lequel la vitesse de rotation d'une roue qui patine est réduite,
caractérisé par le fait que
- un frein freine la roue qui patine, et
- l'appareil de commande (7) règle l'action du frein.

9. Dispositif suivant la revendication 7 ou 8, caractérisé par le fait que
- il est prévu un capteur (62) de l'angle de rotation pour la détection du déplacement du volant (61), et
- l'appareil de commande (7) règle le degré de blocage du dispositif différentiel de blocage (4) ou l'actionnement du frein.
